# EUROPEAN PATENT APPLICATION

(11) **EP 0 544 945 A1**
(43) Date of publication of application: **09.06.1993**
(21) Application number: 91203178.8
(22) Date of filing: 05.12.1991
(51) Int. Cl.: G01F 23/28, H04N 7/18, G02B 17/06

(54) **Optical inspection apparatus and system comprising such an apparatus**

(71) Applicant: THE PROCTER & GAMBLE COMPANY, Cincinnati, Ohio 45202 (US)
(72) Inventor: Cardew, Marcus St. Erme, System Technologies, Ulverston, Cumbria (GB); Johnson, K. W., Skand Comp., Ulverston, Cumbria LA 12 7LN (GB)
(74) Representative: Canonici, Jean-Jacques

(57) **Abstract**

An optical inspection apparatus (1) for a wide angle view of simple construction and low cost can be obtained by using a curved reflector (5) forming a virtual image of an object plane (9). The virtual image is observed by a scanning device (3) such as a CCD-sensor that can be of the line-scanning type. The CCD-sensor (3) faces the curved reflector (5) in such a way that its own image is not reflected back to it. The reflector (5) and the CCD-sensor (3) are mounted in a common housing (15) having a window (17) with an outwardly convex curvature. Inside the housing (15), a light source (21) is comprised for illuminating the object plane (9). The light source (21) is optically isolated from the CCD-sensor (3) by a baffle plate (27). The optical inspection apparatus can advantageously be used inside the porthole (47) of a washing machine (45) for measurement of the foam level inside the washing machine (45).

## Description

### Field of the invention

The invention relates to an optical inspection apparatus comprising an optical scanning device having a light-sensitive entrance face for converting a light intensity distribution at the entrance face into an electrical signal and a reflector having a light-reflecting surface for reflecting light from an object plane onto the entrance face to obtain a wide angle view. The invention also relates to a system comprising such an apparatus.

### Description of the prior art

An apparatus of the above mentioned kind is known from the American Patent US-A-4,355,329.

In this Patent a remote station of an interphone system is disclosed, the remote station being equipped with a pick-up tube of a television camera for forming images of a user of the remote telephone station. A wide angle lens is provided in the housing of the remote station. The image formed by the wide angle lens is projected via a mirror onto the television pick-up tube, which is placed at a right angle to the wide-angle lens. In this way the width of the remote station can be relatively small.

An optical inspection apparatus of the above mentioned kind has as a disadvantage that wide-angle lenses ("fisheye" lenses) are relatively expensive and delicate. Although it was found that with commercially available low-cost moulded lens elements a wide-angle lens structure could be achieved, this lens structure had 4 elements, a relatively limited angle of view (100 ^{o}) and a relatively small aperture requiring large levels of illumination.

### Objects of the invention

It is an object of the invention to provide for an optical inspection apparatus for obtaining a wide-angle view, the apparatus being of a relatively simple construction.
It is a further object of the invention to provide for an optical inspection apparatus which is of relatively small dimensions.
It is another object of the invention to provide for an optical inspection apparatus for automatic inspection of the inside of tubular structures, such as the measurement of liquid levels, particularly the foam level in washing machines.

### Summary of the invention

An optical inspection apparatus according to the present invention is thereto characterized in that the light-reflecting surface is curved.

By the curved reflector, a virtual image is formed of an object plane subtending a large angle, preferably 180 ^{o}, with respect to the reflector. The virtual image is viewed by the optical scanning device, which can be a television pick-up tube or a CCD-camera, the optical scanning device comprising a lens for forming an image of the reflected object plane. By adapting the curvature of the reflecting surface to match the curvature of the object plane to be observed, the reflecting surface being preferably cylindrical for observation of tubular structures, a non-curved image can be obtained. By this, an image having a large depth of field can be obtained of curved object planes .

An embodiment of an optical inspection apparatus according to the invention, the reflector and the scanning device being mounted in a common housing, is characterized in that the housing has a transparent window having an outwardly convex curvature.

For the protection of the scanning device and the reflector from for instance splashing liquid, the inspection apparatus is provided with the transparent window cover. Because of the curvature of the transparent window cover, the optical inspection apparatus can be brought in close proximity to the curved object plane to be observed. Preferably a light source is also included in the housing for illuminating the object plane. The light source is optically isolated from the scanning device by a baffle plate so that no direct illumination of the scanning device can occur.

Another embodiment of an optical inspection apparatus according to the invention is characterized in that the scanning device is a line scanning device.

For object planes exhibiting a one-dimensional structure to be observed by the optical inspection apparatus, such as for instance a horizontal liquid-air interface or a foam-air interface, a line scanning device such as a linear photodiode array or a linear CCD-sensor is preferably used as a scanning device. Use of a line-scanning device instead of a full frame scanning device further reduces costs and size of the optical inspection apparatus.

A system comprising an inspection apparatus according to the invention is characterized in that the system comprises an analog-to-digital convertor for converting the electrical signal from the scanning device into digital signal values, a data collection unit for receiving and storing the digital signal values and a microprocessor for controlling the analog-to-digital convertor, the scanning device and the data collection unit.

The inspection apparatus has mounted in its housing or as a separate unit a microprocessor for controlling the scanning device, such as setting of integration time, sampling rate and clock frequency for charge transfer of the CCD-sensor. The microprocessor also controls the digital-to-analog convertor and a memory, for instance a line memory, connected to the digital-to-analog convertor for receiving the digital signal values. From the line memory, digital signal values are supplied to a personal computer for storing of the signal values and/or further processing such as averaging, determination of the frequency spectrum or identification of erroneous data. Via display means, connected to the personal computer, such as a Liquid Crystal Display screen or a Cathode Ray Tube, the processed data can be displayed numerically or graphically.

An embodiment of a system comprising an optical inspection apparatus according to the invention is characterized in that the data collection unit is a hand-held data collection unit.

When the optical inspection apparatus is used in an environment which is unfavorable to observation of the measurement data because of heat, noise or other environmental conditions, it is advantageous to store the data collected by the inspection apparatus in a hand-held or remote data collection unit. The hand-held unit can after storing the data from the optical inspection apparatus be disconnected from it and be connected to computer for data-processing at a place away from the measuring environment. When a larger number of inspection apparatuses is used, each monitoring a different process, the use of a hand-held data collection unit which is connectable to each of the optical inspection apparatuses, obviates the need for a relatively complex multiplexer for connection of the apparatuses to the computer. For larger numbers of inspection apparatuses that are placed far away from the computer, for instance for use in a chemical plant, the use of a hand-held terminal saves a large amount of cable connecting each inspection apparatus to the computer.

A further embodiment of a system comprising an inspection apparatus according to the invention is characterized in that the system comprises a washing machine having a porthole, the porthole comprising a door having a tubular wall section, the optical inspection apparatus being connected within the door such that the light-reflecting surface faces the tubular wall section.

The optical inspection apparatus is especially suitable to be mounted in the glass porthole of a washing machine for observation of the foam level inside the washing machine. Due to the nonlinear shape and design variations in the axial direction of the glass doors of washing machines, direct viewing of the foam level from the front is complex and requires different data normalization strategies for different machines. It is also observed that there is considerable contact of clothes with the crown of the door, which, especially with light-coloured clothes, could present a difficult optical background for suds discrimination.

It was found that a good viewing area is the perimeter of the glass, at some suitable point between the door edge and the crown. This surface is in all cases tubular or slightly conical in section. An advantage of viewing this tubular wall section is also obtained from the fact that penetration of the washload is reduced by the action of the door crown. Suds behavior and suds levels in this area was found to be representative for the suds level inside the washing machine to an acceptable degree.

Another embodiment of a system comprising an optical inspection apparatus according to the invention is characterized in that he optical inspection apparatus is connected to a bar that is hingedly fixes across the door of the washing machine.

Because of the hinging connection of the optical inspection apparatus, it can easily be swung aside to allow the apparatus or door window to be cleaned or serviced.

### Detailed description of the invention

Some embodiments of an optical inspection apparatus and a system according to the invention will be described in detail with reference to the accompanying drawings. In the drawings
fig. 1 shows a top view of an optical inspection apparatus according to the invention,
fig. 2 shows a side view of the optical inspection apparatus of figure 1,
fig. 3a and 3b show an image formed by reflectors having a different radius of curvature,
fig. 4 shows a configuration comprising two optical inspection apparatuses,
fig. 5 shows a schematic circuit diagram of the optical inspection apparatus
fig. 6 shows a plurality of washing machines each connected to a respective optical inspection apparatus for suds level measurements.
fig. 7 shows a sectional side view of the optical inspection apparatus mounted in the porthole of the washing machine and
fig. 8 shows a front view of the connection of the optical inspection apparatus to the door of the washing machine.

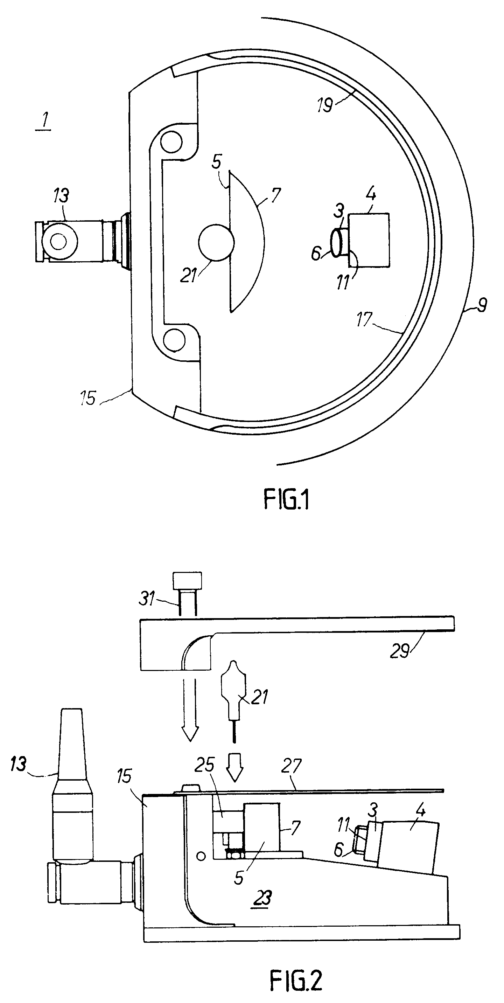

Figure 1 shows the optical inspection apparatus 1 comprising a scanning device 3 and a reflector 5. The reflector 5 has a curved light-reflecting surface 7, consisting for instance of a Cr-layer. Light coming from an object plane 9 is reflected by the reflector onto the entrance face 11 of the scanning device 3. By the curved reflector 5, that is preferably of cylindrical shape, an image of the object plane 9 can be formed through an angle of substantially 180^{o}. The scanning device 3 comprises a lens 6 and preferably a CCD-sensor of the type "TH 7806", produced by Thomson-CSF having a linear array or a matrix of light-sensitive elements, each element accumulating a charge that is dependent on the light-intensity at the light-sensitive element. By transfer of the charge to a shift-register and periodically shifting the contents of the shift-register to its output that is connected to an output 13 of the inspection apparatus, an analogue video signal is formed at the output 13. The reflector 5, the lens 6 and the CCD-sensor 3, are mounted in a housing 15 that has a cylindrical window 17 and a flexible transparent window-cover 19 to protect the interior of the housing 15 from splashing water, and from getting soiled by dust. Inside the housing 15 a light bulb 21, such as a 12 V, 10 W halogen lamp, is mounted for illumination of the object plane 9.

Figure 2 shows a side view of the apparatus 1. The CCD-sensor 3 is mounted on a camera-block 4 that is connected to a chassis block 23 of the housing 15. In order to not have its own image reflected back to it, the CCD-sensor is placed at a lower position than the reflector 5. In this way, the reflector 5 can reflect light coming from the object plane 9 and passing over the CCD-sensor, onto the entrance face 11 via the lens 6. The light bulb 21 is mounted in a socket 25 behind the reflector 5. In order that light coming from the bulb 21 does not reach the CCD-sensor 3 before being reflected back by the object plane 9, the light bulb 21 is optically isolated from the CCD-sensor 3 by a baffle plate 27.Through a hole in the baffle plate 27, the light bulb 21 protrudes into the space enclosed by the baffle plate 27 and a top part 29 of the housing 15. For maintenance purposes, the top part 29 is releasably secured to the lower part of the housing 15 by means of a bolt 31.

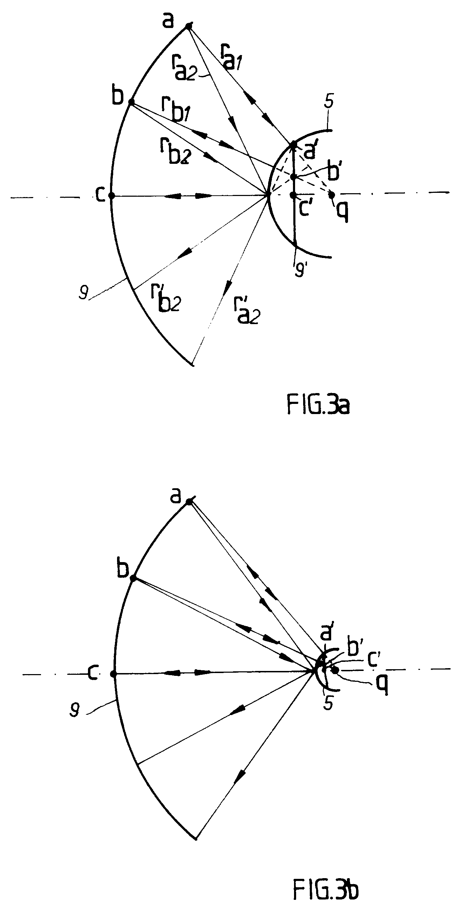

Figure 3a shows how a cylindrical reflector 5 having a radius of curvature R₁ forms a straight virtual image 9' of a curved object plane 9. The object plane 9 and the reflector 5 have a common centre of curvature Q. For a point A in the object plane 9, light travelling along a ray r_{A1}, towards the centre of curvature Q, is reflected back along the same ray r_{A1}. Light coming from point A and travelling along a ray r_{A2}, is reflected along the ray r_{A2}. Extending the rays r_{A1} and r'_{A2} within the area of the reflector 5, gives at their point of intersection the virtual image A' of A. The same procedure can be followed for a point B in the object plane 9 for light travelling along rays r_{B1} and r_{B2}. A relative straight image 9' of the curved object plane 9 is obtained by a reflector having a radius of curvature R₁. In figure 3b it is shown that for a reflector 5 having a relatively small radius of curvature R2, the image 9' of the object plane is more curved. Adjusting the curvature of the reflector to match the curvature of the object plane 9 to be observed, can increase the depth of field of the image formed. It is of course possible to place the reflector 5 at a position that does not coincide with the centre of curvature of the object plane 9.

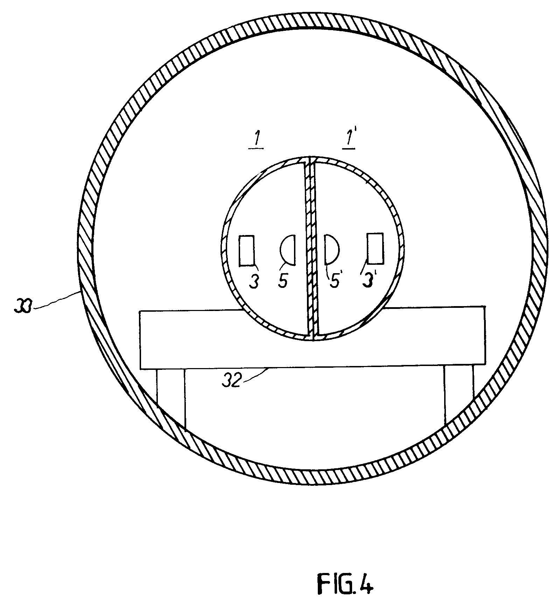

Figure 4 shows an embodiment of two optical inspection apparatus, 1 and 1', the two reflectors 5 and 5' having a field of view of 360°. An optical inspection apparatus of this kind can be mounted on a remote controlled wagon 32, for instance for inspecting the inside of a tube 33 for defects.

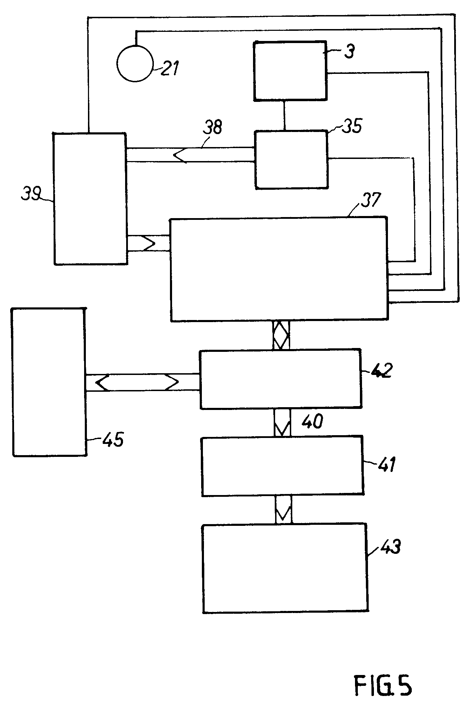

Figure 5 shows a schematic diagram of the electronic circuitry connected to the CCD-sensor 3, the circuitry comprising an analogue-to-digital convertor 35, a microprocessor 37, for instance of the type "NEC V35", a memory 39, a power-communication control unit 42, an interface 41, a computer 43 and a hand-held data collection unit 45. The analogue output of the CCD sensor 3 is converted by the A/D convertor 35, such as a 6-bit flash-convertor, to an 6-bit digital number that is transferred to the memory 39 via a data bus 38. From the memory 39 that is for instance a line-memory, the data can be read into the microprocessor 37 for data-processing. The microprocessor 37 controls the light level of the light bulb 21, provides a clock signal for the A/D convertor 35 and controls reading the digitized signals from the CCD-sensor into the memory 39, sampling rates for instance being between 1 Hz and 10 Hz. The power-communication control unit 39, that is mains powered, provides a 12 V DC level to the CCD-sensor 3, the A/D convertor 35, the microprocessor 37 and the memory 39 and connects the microprocessor 37 to a twisted pair of communication cable 40. The cable 40 is connected to the interface 41, that matches the signals from the power-communication control unit 42 to the logic levels of the computer 43, such as asynchronous communication levels at 9600 boud, 1 start bit, 8 data bits, no parity bit, 1 stop bit. The processed data can be transferred to the computer 43 such as for instance an IBM PC-sonal computer and be numerically or graphically displayed. The data from the memory 39 can instead of to the computer 43, also be transferred to the hand-held data collection unit 45, that after this transfer of data can be disconnected from the power-communication control unit 39 and be connected to a central computer.

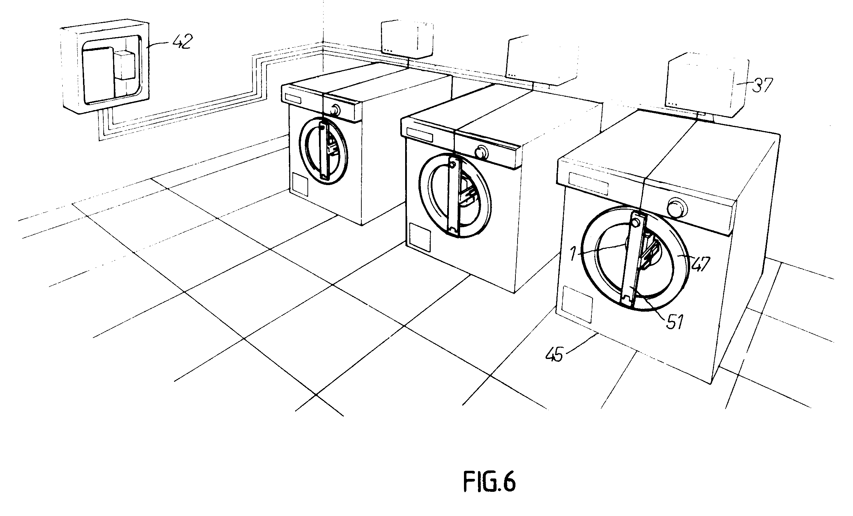

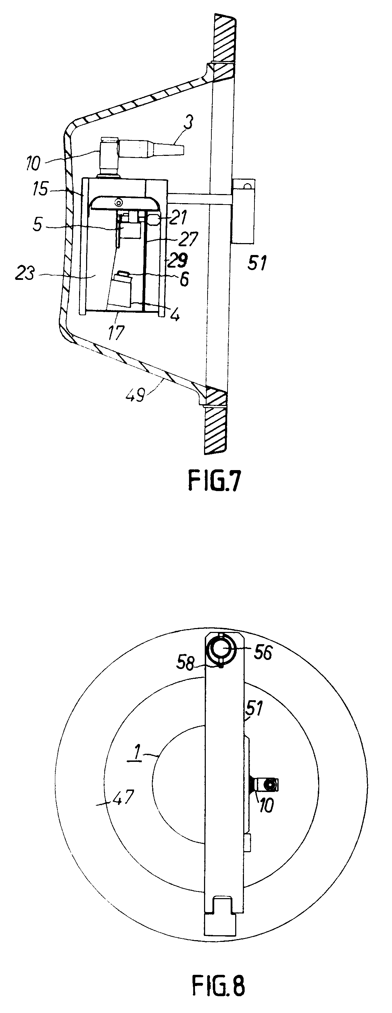

Fig 6 shows an array of washing machines 45, each having a porthole 47 at the inside of which the optical inspection apparatus 1 is mounted. Each porthole 47 comprises a tubular wall section 49, as shown in figure 7. The reflector 5 of each optical inspection apparatus is facing the wall section 49, the wall section forming the object plane 9. During the washing cycle, the foam level at the side of the porthole 47 is relatively stationary and is not disturbed by the movement of the clothes inside the washing machine 45. The foam-to-air and the foam-to-liquid interface are detected by the optical inspection apparatus as transitions in intensity. The signals generated by each inspection apparatus are transferred to a respective wall-mounted microprocessor 37, each of the microprocessors being powered by a central power-communication control unit 42. It is also possible to incorporate the microprocessor 37 together with the CCD-sensor 3 in the housing 15. The wall mounted units would in that case contain only the power supply and R5-485 communications twisted pair connections. The twisted pairs communication cable is looped through each unit 42 to and connected to the interface 41, that may be a R5-485/R5-232 Data convertor. For removal of the inspection apparatus 1 from its measuring position, it is mounted on a support bar 51. The support bar 51 is hingedly connected across the porthole 47.

Figure 7 shows a sectional view through the porthole wall 53. Because of the 90° electrical connection 10, the inspection apparatus is easily connected to its microprocessor 37.

Figure 8 shows a front view of the inspection apparatus 1 mounted inside the porthole 47. The support bar 51, is at its lower part hingedly connected to the washing machine 45 and is fixed in position by a lock means 55 comprising a hole in the support bar 51 fitting around a stub 56 on the washing machine. Through the stub 56 a locking spigot 58 is placed.

## Claims

1. Optical inspection apparatus (1) comprising an optical scanning device (3) having a light-sensitive entrance face (11) for converting a light intensity distribution at the entrance face into an electrical signal and a reflector (5) having a light-reflecting surface (7) for reflecting light from an object plane (9) onto the entrance face (11) to obtain a wide angle view, characterized in that the light reflecting surface (7) is curved.

2. Optical inspection apparatus according to claim 1, characterized in that the light-reflecting surface (7) is a cylindrical surface.

3. Optical inspection apparatus according to claims 1 or 2, the reflector (5) and the scanning device (3) being mounted in a common housing (15), characterized in that the housing (15) has a transparent window (17) having an outwardly convex curvature.

4. Optical inspection apparatus according to any of claims 1 to 3, characterized in that the inspection apparatus comprises a light source (21) for illuminating the object plane (9).

5. Optical inspection apparatus according to claims 3 and 4, characterized in that the light source (21) is mounted in the housing (15).

6. Optical inspection apparatus according to claim 5, characterized in that the light source (21) is optically isolated from the scanning device (3) by a baffle plate (27) for preventing direct illumination of the scanning device.

7. Optical inspection apparatus according to any of claims 1 to 6, characterized in that the scanning device (3) is positioned relative to the reflector (5) such that light coming from the entrance face (11) is not reflected back to the entrance face (11) by the reflector (5).

8. Optical inspection apparatus according to any of claims 1 to 7, characterized in that the scanning device (3) is a line scanning device.

9. System comprising an optical inspection apparatus according to any one of the previous claims, characterized in that the system comprises an analog-to-digital convertor (35) for converting the electrical signal from the scanning device (3) into digital signal values, a data collection unit (45) for receiving and storing the digital signal values and a microprocessor (37) for controlling the analog-to-digital convertor (35), the scanning device (3) and the data collection unit (45).

10. System according to claim 9, characterized in that the data collection (45) unit is a hand-held data collection unit.

11. System according to claims 9 or 10, characterized in that the system comprises a computer (43) which is connectable to the data collection unit (45) for processing the signal values, the computer (43) being connected to a display device for displaying the signal values or the processed signal values.

12. System according to any of claims 9 to 11, characterized in that the system comprises a washing machine (45) having a porthole (47), the porthole (47) comprising a door having a tubular wall section (49), the optical inspection apparatus (1) being connected within the door such that the light-reflecting surface (7) faces the tubular wall section (49).

13. System according to claim 12, characterized in that the optical inspection apparatus (1) is connected to a bar (51) that is hingedly fixed across the door of the washing machine (45).
